# FASCICULE DE BREVET EUROPEEN

(11) **EP 2 045 496 B1**
(45) Date de publication et mention de la délivrance du brevet: **22.09.2010**
(21) Numéro de dépôt: 08165863.5
(22) Date de dépôt: 03.10.2008
(51) Int. Cl.: F16K 31/06

(54) **Vanne à clapet à pression equilibrée**
Klappenschütze mit ausgeglichenem Druck
Balanced pressure flap gate

(30) Priorité: 04.10.2007 FR 0758062
(43) Date de publication de la demande: 08.04.2009
(73) Titulaire: G. Cartier Technologies, 74302 Cluses (FR)
(72) Inventeur: Bouchankouk, Aziz, 69100 Villeurbanne (FR); Breheret, Jean-Luc, 74440 Mieussy (FR); Monnin, David, 74800 Saint Pierre en Faucigny (FR)
(74) Mandataire: Poncet, Jean-François

(56) Documents cités:
- EP-A- 1 717 501
- WO-A-2007/088043
- GB-A- 2 338 050

## Description

La présente invention concerne les vannes à clapet pour la commande d'écoulement d'un fluide dans une canalisation, et plus particulièrement les vannes à clapet à pression équilibrée, dans lesquelles un obturateur mobile comprend un double clapet et un équilibrage de pression de part et d'autre du clapet pour en faciliter le mouvement, selon les caractéristiques du préambule de la revendication indépendante 1.

Dans une vanne à clapet traditionnelle, un obturateur mobile est monté dans un corps de vanne creux dont le logement intérieur met en communication un passage d'entrée de fluide avec un passage de sortie de fluide. L'obturateur mobile est monté coulissant dans le logement intérieur, entre une position de fermeture dans laquelle il vient en appui contre un siège du corps de vanne pour interrompre l'écoulement du fluide, et une position d'ouverture dans laquelle l'obturateur mobile est à l'écart du siège du corps de vanne pour autoriser l'écoulement du fluide.

L'obturateur mobile est généralement déplacé par un actionneur électromagnétique comprenant un solénoïde et un noyau mobile en fer doux couplé mécaniquement à l'obturateur mobile. Le déplacement de l'obturateur vers l'une des positions ouverte ou fermée est assuré par l'alimentation du solénoïde en énergie électrique qui attire alors le noyau mobile et l'obturateur mobile. Le déplacement de l'obturateur mobile dans l'autre direction est assuré par un ressort de rappel lorsque le solénoïde n'est plus alimenté.

Dans une vanne à clapet traditionnelle, le clapet en position de fermeture subit la différence de pression entre la pression du fluide en amont de la vanne et la pression du fluide en aval de la vanne. Si cette différence de pression force le clapet vers sa position de fermeture, l'étanchéité est bien assurée. Mais alors, il faut exercer une force importante pour ouvrir la vanne car il faut vaincre la force résultant de la différence des pressions de fluide. Il faut donc dimensionner en conséquence l'actionneur électromagnétique et le ressort de rappel.

Si le clapet est sollicité par la différence de pression vers sa position d'ouverture, il faut également dimensionner en conséquence le ressort de rappel pour vaincre la force de pression différentielle sur l'obturateur mobile et assurer ainsi le maintien de l'étanchéité de la vanne en position de fermeture.

On comprend que la force d'actionnement nécessaire pour la manoeuvre de l'obturateur mobile dépend ainsi de la pression exercée par le fluide sur l'obturateur mobile, et il faut utiliser un actionneur électromagnétique de taille suffisante pour vaincre les forces de pression. Il en résulte la nécessité d'utiliser un solénoïde de grande taille si le fluide à commander est à haute pression.

Pour réduire la force nécessaire au déplacement de l'obturateur mobile d'une vanne à clapet, et la rendre peu dépendante de la pression du fluide à commander, on a déjà proposé des vannes à clapet à pression équilibrée, telles que décrites par exemple dans le document GB 2 338 050 A formant l'état de la technique le plus pertinant.

Dans ce cas, l'obturateur mobile comprend un premier moyen d'obturation et un second moyen d'obturation, décalés l'un de l'autre selon la direction de déplacement de l'obturateur mobile, et coopérant respectivement avec un premier siège du corps de vanne et un second siège du corps de vanne. Un passage d'équilibrage est prévu pour permettre le passage du fluide entre les deux extrémités opposées de l'obturateur mobile.

Ce document décrit un premier mode de réalisation (figure 1) dans lequel le premier moyen d'obturation est une partie annulaire frontale de l'obturateur mobile qui vient en appui axial sur un siège annulaire du corps de vanne, tandis que le second moyen d'obturation est un joint torique périphérique monté sur l'obturateur mobile et frottant contre la paroi latérale du corps de vanne. Le fluide entre à une extrémité de l'obturateur mobile et sort par une chambre annulaire entre les deux moyens d'obturation. Par l'équilibrage des pressions aux deux extrémités de l'obturateur mobile, la force nécessaire pour l'actionnement en déplacement de l'obturateur mobile est réduite si l'on prévoit le même diamètre sur les deux moyens d'obturation. Il faut toutefois encore vaincre la force de frottement exercée par le joint torique, vaincre la différence de pression résiduelle pouvant résulter des tolérances de fabrication sur les diamètres des moyens d'obturation, et vaincre l'éventuelle force de collage des deux moyens d'obturation sur les parties correspondantes du corps de vanne.

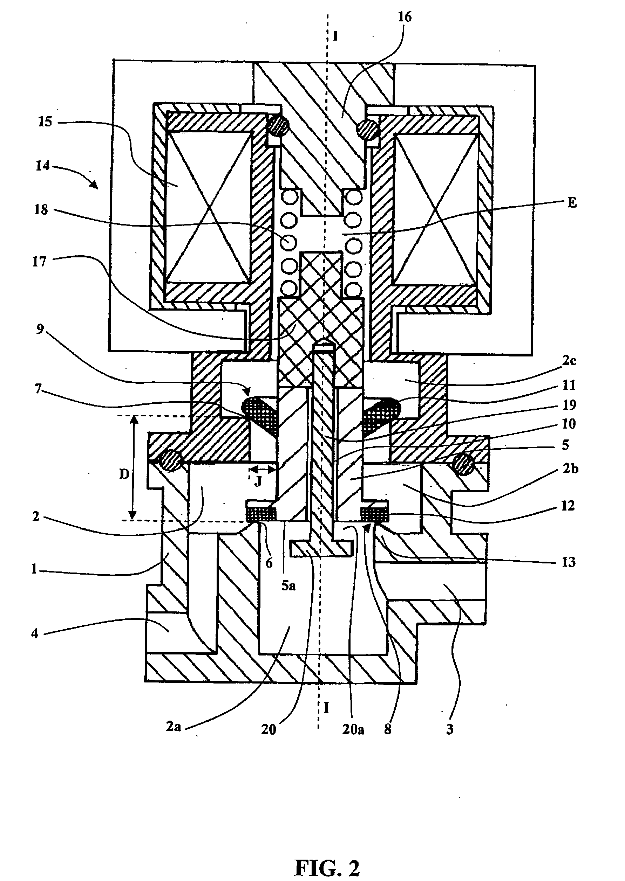

Ce même document décrit un second mode de réalisation (figure 2), dans lequel le second moyen d'obturation est également une partie annulaire frontale de l'obturateur mobile qui vient en appui axial sur un second siège du corps de vanne. Cette seconde solution peut paraître séduisante, par la suppression du frottement du joint torique sur la paroi du corps de vanne. Mais il devient alors impossible de réaliser une étanchéité satisfaisante et simultanée des deux moyens d'obturation, dès lors que l'obturateur mobile, pour éviter les frottements, n'est pas guidé latéralement. Cette solution est hyperstatique, et ne permet pas de maîtriser l'équilibrage des appuis.

Il existe donc un besoin de concevoir une vanne à pression équilibrée qui, à la fois, minimise les frottements sur l'obturateur mobile et assure une étanchéité satisfaisante en position de fermeture. L'intérêt d'une telle vanne serait d'assurer son actionnement par un actionneur électromagnétique de taille réduite, consommant moins d'énergie, et nécessitant un plus faible coût de production.

Pour satisfaire ce besoin, l'idée qui est à la base de l'invention est de prévoir qu'au moins l'un des moyens d'obturation de l'obturateur mobile permette d'assurer une étanchéité satisfaisante, sans frottement, malgré d'éventuelles variations de position de l'obturateur mobile vis-à-vis du siège correspondant du corps de vanne.

Selon un autre aspect de l'invention, on cherche à concevoir les moyens d'obturation limitant les effets d'un collage éventuel sur le siège du corps de vanne, pour réduire encore la force d'actionnement nécessaire de l'obturateur mobile et la taille des actionneurs électromagnétiques à utiliser.

Selon un autre aspect, l'invention vise également à prévoir des moyens facilitant le décollage de l'obturateur mobile dans l'hypothèse d'un collage éventuel sur les sièges du corps de vanne, ce décollage étant assuré sans augmenter la taille de l'actionneur électromagnétique.

De façon générale, l'invention vise à réduire la force d'actionnement nécessaire qu'il faut appliquer sur l'obturateur mobile dans une vanne pilotée à clapet, afin de pouvoir commander, avec un actionneur électromagnétique de faible taille, des pressions de fluide importantes, par exemple de l'ordre de 20 bars ou plus.

Pour atteindre ces buts ainsi que d'autres, l'invention propose une vanne à clapet à pression équilibrée, dans laquelle :
- un corps de vanne creux est muni d'un logement intérieur ayant un passage d'entrée de fluide et un passage de sortie de fluide,
- un obturateur mobile est logé dans le logement intérieur et est monté coulissant selon une direction de déplacement,
- le corps de vanne comprend, dans le logement intérieur, un premier siège annulaire d'obturation et un second siège annulaire d'obturation, à même orientation axiale, décalés l'un de l'autre selon la direction de déplacement, et délimitant dans le logement intérieur une première chambre extrême, une chambre intermédiaire entre les deux sièges annulaires d'obturation, et une seconde chambre extrême, le second siège annulaire d'obturation ayant un diamètre égal ou légèrement supérieur à celui du premier siège annulaire d'obturation,
- l'obturateur mobile comprend un premier moyen d'obturation et un second moyen d'obturation, décalés l'un de l'autre selon la direction de déplacement, et coopérant respectivement avec le premier siège annulaire d'obturation et avec le second siège annulaire d'obturation du corps de vanne,
- l'obturateur mobile est déplaçable, par des moyens d'entraînement en translation selon la direction de déplacement, entre une position d'obturation dans laquelle ses moyens d'obturation sont en contact des sièges annulaires d'obturation respectifs et isolent sélectivement les unes des autres de façon étanche la première chambre extrême, la chambre intermédiaire et la deuxième chambre extrême, et une position d'ouverture dans laquelle les moyens d'obturation sont à l'écart des sièges annulaires d'obturation respectifs,
- les première et seconde chambres extrêmes communiquent l'une avec l'autre par un passage d'équilibrage,
- la chambre intermédiaire communique avec l'un du passage d'entrée de fluide et du passage de sortie de fluide,
- les chambres extrêmes communiquent avec l'autre du passage d'entrée de fluide et du passage de sortie de fluide,
- le second moyen d'obturation comprend une lèvre annulaire radiale élastiquement flexible qui, en position d'obturation, vient en appui contre le second siège annulaire d'obturation du corps de vanne,
- la lèvre annulaire radiale est évasée vers l'amont par rapport au sens d'écoulement du fluide depuis le passage d'entrée de fluide vers le passage de sortie de fluide.

La capacité de déformation de la lèvre annulaire radiale évasée lui permet d'assurer une bonne étanchéité quelle que soit la pression du fluide en amont de la vanne. L'obturateur mobile se positionne en étant guidé essentiellement par le premier moyen d'obturation, qui peut être relativement rigide. La déformation de la lèvre annulaire radiale élastiquement flexible compense les variations éventuelles de position pour assurer l'étanchéité simultanée des deux moyens d'obturation.

Simultanément, l'obturateur mobile n'est freiné par aucun frottement latéral sur la paroi du corps de vanne, lors de ses mouvements d'ouverture et de fermeture, et l'on peut choisir les diamètres respectifs des deux moyens d'obturation pour équilibrer les forces de poussée axiale de part et d'autre de l'obturateur mobile, forces de poussée qui résultent de la pression différentielle du fluide en amont et en aval de la vanne.

De préférence, en position d'obturation, la lèvre annulaire radiale fléchit vers l'amont sur l'obturateur mobile en étant repoussée par le second siège annulaire d'obturation.

De la sorte, lors de la fermeture de la vanne, le second moyen d'obturation à lèvre annulaire radiale assure une obturation un peu avant le premier moyen d'obturation, et maintient cette obturation jusqu'à fermeture complète du premier moyen d'obturation, tout en autorisant le mouvement axial et les oscillations latérales de l'obturateur mobile qui s'adapte ainsi à la conformation du premier moyen d'obturation pour assurer une double étanchéité parfaite.

En pratique, le second siège annulaire d'obturation peut être un épaulement du corps de vanne, contre lequel la lèvre annulaire radiale vient en appui oblique. Un jeu radial important peut être laissé entre l'obturateur mobile et le second siège annulaire d'obturation, jeu obturé par la lèvre annulaire radiale, afin de laisser une bonne capacité d'oscillation latérale de l'obturateur mobile.

Selon un mode de réalisation, le premier moyen d'obturation peut comprendre un joint annulaire d'obturation sur l'un du corps de vanne et de l'obturateur mobile, et peut comprendre une partie annulaire de contact sur l'autre du corps de vanne et de l'obturateur mobile pour coopérer par appui axial selon la direction de déplacement avec le joint annulaire d'obturation.

Une telle structure de premier moyen d'obturation peut être relativement rigide, dès lors que l'obturateur mobile peut osciller librement pour s'adapter à la conformation du premier moyen d'obturation en position de fermeture.

Il y a essentiellement deux façons de piloter l'écoulement de fluide avec un tel moyen d'obturation.

Selon une première possibilité :
- la chambre intermédiaire peut être raccordée au passage de sortie de fluide,
- l'une des chambres extrêmes peut être raccordée au passage d'entrée de fluide,
- le passage d'équilibrage peut traverser axialement l'obturateur mobile.

Selon une seconde possibilité :
- la chambre intermédiaire peut être raccordée au passage d'entrée de fluide,
- l'une des chambres extrêmes peut être raccordée au passage de sortie de fluide,
- le passage d'équilibrage peut mettre en communication l'autre chambre extrême avec le passage de sortie de fluide.

Dans l'un et l'autre des cas, l'équilibrage des pressions de part et d'autre de l'obturateur mobile réduit la force d'actionnement nécessaire pour déplacer l'obturateur entre les positions ouverte et fermée, quelle que soit la pression du fluide dans la vanne.

La structure de vanne définie ci-dessus permet de réaliser une électrovanne, dans laquelle l'obturateur mobile est couplé mécaniquement à un actionneur électromagnétique assurant son entraînement en translation selon la direction de déplacement.

A cet égard, on peut utiliser divers types d'actionneurs électromagnétiques.

Selon un mode de réalisation avantageux :
- l'actionneur électromagnétique peut comprendre un solénoïde dans lequel est engagé un noyau d'attraction en fer doux, et dans lequel coulisse selon la direction de déplacement un noyau mobile en fer doux couplé mécaniquement à l'obturateur mobile,
- un ressort de rappel peut solliciter le noyau mobile en translation selon la direction de déplacement à l'encontre de la force d'attraction exercée par le solénoïde et par le noyau d'attraction sur le noyau mobile.

Avantageusement, le solénoïde alimenté peut exercer une force tendant à ouvrir la vanne, tandis que le ressort de rappel exerce une force tendant à fermer la vanne.

Grâce à l'absence de frottement sur l'obturateur mobile pendant son déplacement axial dans le corps de vanne, et grâce à l'équilibrage des pressions de fluide de part et d'autre de l'obturateur mobile, le ressort de rappel peut avoir une force relativement faible, juste suffisante pour assurer le rappel de l'obturateur mobile en position de fermeture entre les sièges annulaires d'obturation du corps de vanne. L'obturation reste assurée quelle que soit la pression du fluide en amont de la vanne, puisque la pression reste équilibrée. L'équilibre des forces appliquées sur l'obturateur mobile par le fluide est obtenu par le fait que les deux sièges annulaires d'obturation ont sensiblement le même diamètre.

Par le fait que le ressort de rappel a une force relativement faible, la force que doit exercer le solénoïde pour ouvrir la vanne est relativement faible : le solénoïde doit vaincre à la fois la force de rappel du ressort, l'éventuel déséquilibre de pression dû à une différence des diamètres des deux sièges annulaires d'obturation, et les éventuelles forces de collage des moyens d'obturation sur les sièges annulaires d'obturation correspondants. Ces forces sont relativement faibles, de sorte que le solénoïde peut être de petite taille, et comporter un faible poids de cuivre dans son enroulement électrique.

Selon l'invention, on peut en outre prévoir des moyens qui favorisent encore l'ouverture de la vanne, sans nécessiter une force importante de l'actionneur électromagnétique. Ces moyens consistent à provoquer un soulèvement spécifique de la lèvre annulaire radiale à l'écart du second siège annulaire d'obturation.

Pour cela, le noyau mobile est couplé mécaniquement à l'obturateur mobile avec une capacité limitée d'éloignement axial relatif l'un par rapport à l'autre, et un organe de soulèvement, par exemple un élément annulaire, ou un élément annulaire tronqué, ou plus avantageusement des doigts de soulèvement, est couplé mécaniquement au noyau mobile, et est apte à porter spécifiquement en appui contre la lèvre annulaire radiale pour la décoller du second siège annulaire d'obturation pendant la course du noyau mobile vers le noyau d'attraction, avant entraînement de l'obturateur mobile.

De la sorte, avec une faible force exercée localement sur la lèvre annulaire radiale elle-même, on provoque son décollement et un début d'équilibrage de pression de part et d'autre de la lèvre annulaire radiale, de sorte que la translation de l'obturateur mobile vers sa position ouverte est encore facilitée, sans nécessiter l'application d'une force de translation importante.

En pratique, pour permettre la capacité d'éloignement axial relatif limité, le noyau mobile peut être couplé mécaniquement à l'obturateur mobile par une tige axiale fixée au noyau mobile, engagée à coulissement à travers l'obturateur mobile, et munie d'une excroissance radiale d'extrémité venant en opposition de la face opposée de l'obturateur mobile et portant l'organe de soulèvement.

Avantageusement, l'organe de soulèvement vient porter contre la lèvre annulaire après une course initiale du noyau mobile vers le noyau d'attraction. L'entrefer entre le noyau mobile et le noyau d'attraction est alors réduit, et la force de soulèvement appliquée contre la lèvre annulaire est augmentée.

Selon l'invention, on peut en outre prévoir des moyens facilitant encore le décollement de l'obturateur mobile lorsque les moyens d'obturation sont légèrement collés au siège annulaire d'obturation correspondant. Pour cela, pendant la course du noyau mobile vers le noyau d'attraction, le noyau mobile constitue une masse inertielle apte à frapper l'obturateur mobile vers sa position ouverte.

Selon l'invention, un autre moyen efficace pour réduire encore la taille du solénoïde de l'actionneur électromagnétique est de prévoir un second ressort de rappel qui sollicite directement l'obturateur mobile vers sa position de fermeture. Dans ce cas, les deux ressorts de rappel combinent leur action pour assurer le maintien de l'obturateur mobile en position de fermeture lorsque le solénoïde n'est pas alimenté, de sorte que l'on peut prévoir un premier ressort de rappel dont la force est plus faible qu'en l'absence d'un second ressort. En début d'ouverture, le noyau mobile est relativement écarté du noyau d'attraction, avec un entrefer important, de sorte que la force électromagnétique est relativement faible. Cette force est cependant suffisante pour comprimer le seul premier ressort de rappel et déplacer le noyau mobile vers le noyau d'attraction, alors que l'obturateur mobile n'est pas encore déplacé, du fait de la capacité d'éloignement axial relatif limité qui est prévue entre le noyau mobile et l'obturateur mobile. Ensuite, lorsque la limite d'éloignement axial relatif est atteinte, le noyau mobile se trouve couplé mécaniquement à l'obturateur mobile et l'entraîne en translation. Il faut alors vaincre la force combinée des deux ressorts de rappel. Mais à ce moment, l'entrefer entre le noyau mobile et le noyau d'attraction est réduit, de sorte que la force d'attraction magnétique est plus importante, sans nécessiter une plus grande excitation magnétique par le solénoïde.

Selon une possibilité d'application, la vanne peut être utilisée comme vanne de régulation, en prévoyant en outre un moyen moteur apte à déplacer axialement le noyau d'attraction.

D'autres objets, caractéristiques et avantages de la présente invention ressortiront de la description suivante de modes de réalisation particuliers, faite en relation avec les figures jointes, parmi lesquelles :
- la figure 1 est une vue schématique en coupe longitudinale d'une vanne à clapet selon un premier mode de réalisation de la présente invention, en position de fermeture ;
- la figure 2 est une vue schématique en coupe longitudinale d'une vanne à clapet selon un second mode de réalisation de la présente invention, en position de fermeture ;
- la figure 3 est une vue schématique en coupe longitudinale d'une vanne à clapet selon un troisième mode de réalisation de la présente invention, en position de fermeture ;
- la figure 4 est une coupe longitudinale de la vanne de la figure 3, en début d'ouverture ;
- la figure 5 est une coupe longitudinale de la vanne de la figure 3, en position d'ouverture ;
- la figure 6 est une coupe longitudinale de la vanne de la figure 3, en début de fermeture ;
- la figure 7 est une coupe longitudinale d'une vanne à clapet selon un quatrième mode de réalisation de la présente invention, en position de fermeture ;
- la figure 8 est une vue en coupe longitudinale d'une vanne à clapet selon un cinquième mode de réalisation de la présente invention, avec moteur d'entraînement ; et
- les figures 9 à 11 illustrent respectivement, en vue de face, en vue de dessus et en vue de côté, le détail d'une structure à doigts de soulèvement telle que celle que l'on retrouve dans les modes de réalisation des figures 3 à 8.

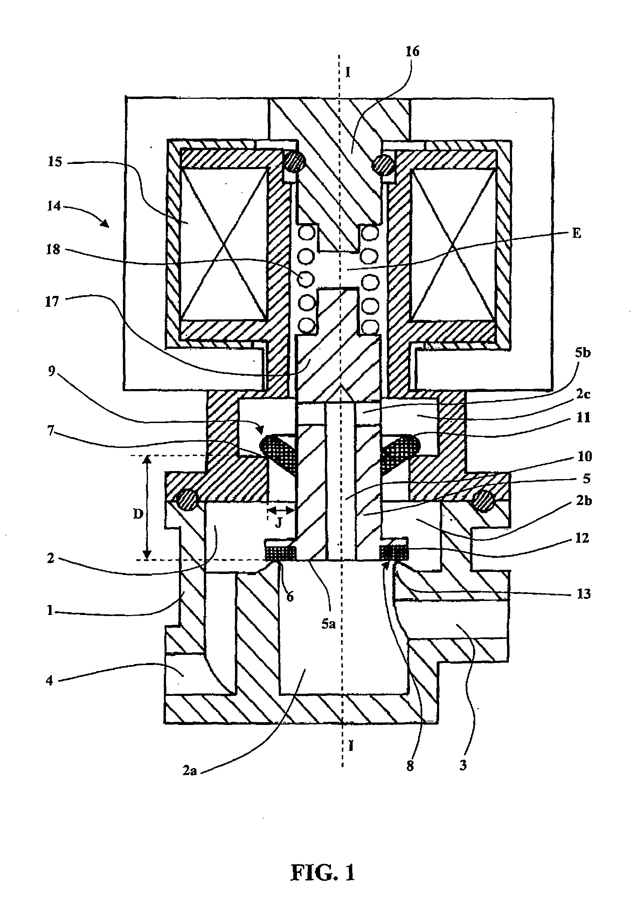

On considère tout d'abord le premier mode de réalisation illustré sur la figure 1, en décrivant les moyens qui vont se retrouver dans tous les modes de réalisation illustrés dans les autres figures.

La vanne à clapet selon l'invention comprend un corps de vanne 1 creux, par exemple en métal ou en matière plastique, muni d'un logement intérieur 2 qui communique avec l'extérieur par un passage d'entrée de fluide 3 et un passage de sortie de fluide 4 distincts l'un de l'autre.

Un obturateur mobile 5 est logé dans le logement intérieur 2 du corps de vanne 1, et peut coulisser selon une direction de déplacement I-I.

Dans le logement intérieur 2, le corps de vanne 1 comprend un premier siège annulaire d'obturation 6 et un second siège annulaire d'obturation 7. Le premier siège annulaire d'obturation 6 est une partie annulaire de contact 13 telle qu'une nervure annulaire orientée vers le haut sur la figure 1, tandis que le second siège annulaire d'obturation 7 est formé par l'arête d'un épaulement du logement intérieur 2 qui va en s'élargissant vers le haut sur la figure 1. Les deux sièges annulaires d'obturation 6 et 7 ont ainsi la même orientation.

Les deux sièges annulaires d'obturation 6 et 7 sont décalés l'un de l'autre le long de la direction de déplacement I-I selon un écart axial D.

L'obturateur mobile 5 comprend un premier moyen d'obturation 8 et un second moyen d'obturation 9, décalés l'un de l'autre selon la direction de déplacement I-I, et coopérant respectivement avec le premier siège annulaire d'obturation 6 et avec le second siège annulaire d'obturation 7 du corps de vanne 1 pour les obturer simultanément. Autrement dit, la distance axiale entre les deux moyens d'obturation 8 et 9 de l'obturateur mobile 5 est peu différente de l'écart axial D entre les deux sièges annulaires d'obturation 6 et 7.

En position d'obturation, illustrée sur la figure 1, les sièges annulaires d'obturation 6 et 7 et les moyens d'obturation 8 et 9 isolent l'une de l'autre, dans le logement intérieur 2, une première chambre extrême 2a, une chambre intermédiaire 2b, et une seconde chambre extrême 2c.

Un passage d'équilibrage 10 met en communication l'une avec l'autre les première et seconde chambres extrêmes 2a et 2c, pour que le fluide puisse passer d'une chambre à l'autre et exerce la même pression sur les deux extrémités de l'obturateur mobile 5.

Les deux sièges annulaires d'obturation 6 et 7 ont sensiblement le même diamètre. Il en résulte que le fluide exerce alors, sur l'obturateur mobile 5, des forces axiales égales et opposées respectivement sur la face supérieure et sur la face inférieure de l'obturateur mobile 5, réalisant une vanne à clapet à pression équilibrée.

En pratique, on donne avantageusement au diamètre du second siège annulaire d'obturation 7 une valeur légèrement supérieure à celle du diamètre du premier siège annulaire d'obturation 6, comme cela sera expliqué plus loin, pour garantir une étanchéité satisfaisante à la fermeture quelle que soit la pression du fluide dans la vanne.

Le second moyen d'obturation 9 comprend une lèvre annulaire radiale 11, élastiquement flexible, qui se développe radialement à l'écart du corps de l'obturateur mobile 5, comme on le voit sur la figure. La lèvre annulaire radiale 11 est évasée vers le haut sur la figure 1, en forme générale tronconique à sommet dirigé vers le bas. La face concave de la lèvre annulaire radiale 11, qui est sur cette figure 1 la face orientée vers le haut, est destinée à recevoir la pression d'entrée de fluide ou haute pression, tandis que sa face convexe, qui est la face dirigée vers le bas sur la figure 1, est destinée à recevoir la pression de sortie du fluide ou basse pression.

La lèvre annulaire radiale 11 peut être réalisée en élastomère.

En position d'obturation, illustrée sur la figure 1, la lèvre annulaire radiale 11 vient en appui oblique contre le second siège annulaire d'obturation 7. Sa capacité de flexion donne à l'obturateur mobile 5, sans perte d'étanchéité entre la lèvre annulaire radiale 11 et le second siège annulaire d'obturation 7, une capacité de déplacement axial selon la direction de déplacement I-I, ainsi qu'une capacité de déplacement radial de part et d'autre de l'axe I-I, dans la mesure où un jeu radial J, relativement important, est ménagé entre le corps d'obturateur mobile 5 et la paroi latérale du corps de vanne 1.

De préférence, en position d'obturation illustrée sur la figure 1, la lèvre annulaire radiale 11 est légèrement fléchie vers le haut (vers l'amont dans le sens d'écoulement du fluide), en étant repoussée par le second siège annulaire d'obturation 7, pour assurer une bonne étanchéité des seconds moyens d'obturation 9 tout en autorisant les déplacements de l'obturateur mobile 5 qui permettent une bonne étanchéité du premier moyen d'obturation 8.

Dans la réalisation illustrée sur les figures, le premier moyen d'obturation 8 comprend un joint annulaire d'obturation 12, monté sur l'obturateur mobile 5, et venant porter axialement contre la partie annulaire de contact 13 ou nervure annulaire formant le premier siège annulaire d'obturation 6. Le premier moyen d'obturation 8 est ainsi plus rigide que le second moyen d'obturation 9 à lèvre annulaire radiale 11.

L'obturateur mobile 5 est couplé mécaniquement à un actionneur électromagnétique 14, qui assure son entraînement en translation selon la direction de déplacement I-I, entre une position extrême de fermeture (position sur la figure 1) et une position extrême d'ouverture.

L'actionneur électromagnétique 14 comprend un solénoïde 15 coaxial dans lequel est engagé un noyau d'attraction 16 en fer doux, et dans lequel coulisse, selon la direction de déplacement I-I, un noyau mobile 17 en fer doux lui-même couplé mécaniquement à l'obturateur mobile 5. Un entrefer E est réservé entre le noyau mobile 17 et le noyau d'attraction 16. L'entrefer E est choisi de façon à varier en cours de fonctionnement, de façon à autoriser la course axiale nécessaire de l'obturateur mobile 5 entre ses positions d'obturation et d'ouverture.

Un ressort de rappel 18, par exemple engagé entre le noyau d'attraction 16 et le noyau mobile 17, sollicite le noyau mobile 17 à l'écart du noyau d'attraction 16, c'est-à-dire à l'encontre de la force d'attraction exercée par le solénoïde 15 et par le noyau d'attraction 16.

Les moyens qui viennent d'être décrits se retrouvent dans les autres modes de réalisation décrits dans les figures suivantes. Ces moyens identiques seront repérés par les mêmes références numériques dans les autres figures, et ne seront donc pas décrits à nouveau.

On considère maintenant les moyens spécifiques du mode de réalisation de la figure 1.

Dans ce cas, le solénoïde 15, lorsqu'il est alimenté en énergie électrique, exerce une force magnétique tendant à ouvrir la vanne, tandis que le ressort de rappel 18 exerce une force tendant à fermer la vanne en repoussant les moyens d'obturation 8 et 9 contre les sièges annulaires d'obturation respectifs 6 et 7.

Dans ce mode de réalisation, la chambre intermédiaire 2b est raccordée au passage de sortie de fluide 4, tandis que la première chambre extrême 2a est raccordée au passage d'entrée de fluide 3. Le premier moyen d'obturation 8 et le premier siège annulaire d'obturation 6 se situent entre la première chambre extrême 2a et la chambre intermédiaire 2b, tandis que le second moyen d'obturation 9 et le second siège annulaire d'obturation 7 se situent entre la chambre intermédiaire 2b et la seconde chambre extrême 2c.

Le passage d'équilibrage 10 est un trou axial qui traverse axialement l'obturateur mobile 5, depuis sa face inférieure 5a, et qui communique avec la seconde chambre extrême 2c annulaire par des canaux transversaux 5b.

Le noyau mobile 17 et le corps d'obturateur mobile 5 sont monobloc, constitués d'une seule pièce, en matériau ferromagnétique apte à être attiré par le champ magnétique généré par le solénoïde 15.

En position de fermeture telle qu'illustrée sur la figure 1, l'entrefer E est maximum, de valeur supérieure ou égale à la course nécessaire de l'obturateur mobile 5 lorsqu'il va jusqu'à sa position de pleine ouverture. La haute pression de fluide, ou pression présente dans le fluide en amont de la vanne, se retrouve par le passage d'entrée de fluide 3 et par le passage d'équilibrage 10, à la fois dans la première chambre extrême 2a et dans la seconde chambre extrême 2c. Par contre, la pression basse de fluide, ou pression présente en aval de la vanne, se retrouve par le passage de sortie de fluide 4 dans la chambre intermédiaire 2b. La pression différentielle de fluide exerce, sur l'obturateur mobile 5, deux forces axiales opposées, la première appliquée sur la face inférieure 5a, la seconde appliquée sur l'autre face de l'obturateur mobile 5. Ces deux forces sont chacune proportionnelles à la section définie par le siège annulaire d'obturation respectif 6 ou 7, et peuvent donc être rendues aussi proches que possible en prévoyant des diamètres sensiblement égaux. De préférence, le diamètre du second siège annulaire d'obturation 7 sera choisi légèrement plus grand que le diamètre du premier siège annulaire d'obturation 6, de façon qu'un accroissement de pression amont de fluide provoque une poussée résultante qui plaque l'obturateur mobile 5 vers sa position de fermeture, assurant une bonne étanchéité.

Du fait du quasi équilibrage des forces axiales exercées par le fluide sur le second siège annulaire d'obturation 7, la force nécessaire pour ouvrir la vanne comprend seulement : la force axiale différentielle pouvant résulter de la différence des diamètres des deux sièges annulaires d'obturation 6 et 7, augmentée de la force du ressort de rappel 18, et augmentée de la force de collage éventuel des moyens d'obturation 8 et 9 contre les sièges annulaires d'obturation 6 et 7. Cette force est faible, en l'absence de frottement s'opposant au coulissement de l'obturateur mobile 5 dans le corps de vanne 1. Simultanément, grâce à la flexibilité de la lèvre annulaire radiale 11, une bonne étanchéité est assurée en position de fermeture. L'alimentation du solénoïde provoque l'attraction du noyau mobile 17, qui déplace aisément l'obturateur mobile 5 jusqu'en position d'ouverture, tandis que l'entrefer E se réduit.

Selon une variante avantageuse du mode de réalisation de la figure 1, le passage d'entrée de fluide 3 connecte directement la seconde chambre extrême 2c, c'est-à-dire la chambre limitée par le second moyen d'obturation 9 à lèvre annulaire radiale 11. On favorise ainsi l'étanchéité de la vanne lors de possibles surpressions transitoires.

On considère maintenant les moyens spécifiques du second mode de réalisation tel qu'illustré sur la figure 2.

On retrouve, dans ce second mode de réalisation, la même disposition relative du passage d'entrée de fluide 3, du passage de sortie de fluide 4, des sièges annulaires d'obturation 6 et 7, des moyens d'obturation 8 et 9.

La différence réside dans le couplage mécanique entre le noyau mobile 17 et l'obturateur mobile 5.

Alors que, dans le mode de réalisation illustré sur la figure 1, le noyau mobile 17 et l'obturateur mobile 5 étaient une structure monobloc, dont le mouvement de l'un et l'autre était simultané, on prévoit, dans le mode de réalisation de la figure 2, une capacité limitée d'éloignement axial relatif du noyau mobile 17 par rapport à l'obturateur mobile 5 : une tige axiale 19 est fixée à sa première extrémité au noyau mobile 17, est engagée à coulissement dans le passage d'équilibrage 10 de l'obturateur mobile 5 qu'elle traverse, et sa seconde extrémité est munie d'une excroissance radiale d'extrémité 20 qui vient en opposition de la face inférieure 5a de l'obturateur mobile 5. La tige axiale 19 est plus longue que l'obturateur mobile 5, de sorte que, en position de fermeture illustrée sur la figure 2, un écart initial 20a est ménagé entre l'excroissance radiale d'extrémité 20 et la face inférieure 5a de l'obturateur mobile 5. L'entrefer E initial est supérieur à l'écart initial 20a.

En alimentant le solénoïde 15, on provoque l'attraction du noyau mobile 17, qui entraîne la tige axiale 19. Pendant un début de course axiale selon une distance égale à l'écart initial 20a, l'obturateur mobile 5 n'est pas entraîné, et la haute pression de fluide le maintient en position de fermeture, alors que le noyau mobile 17 s'écarte de lui jusqu'à ce que l'excroissance radiale d'extrémité 20 vienne porter contre la face inférieure 5a de l'obturateur mobile 5. A partir de cet instant, le noyau mobile 17 entraîne l'obturateur mobile 5 vers sa position d'ouverture, à l'écart des sièges annulaires d'obturation 6 et 7.

Pendant le début de course axiale, le noyau mobile 17 et la tige axiale 19 ont pris une certaine vitesse, de sorte que leur inertie provoque ensuite sur le noyau mobile 5 un choc qui favorise le décollement des moyens d'obturation 8 et 9 à l'écart des sièges annulaires d'obturation 6 et 7. Ainsi, il n'est pas nécessaire de prévoir un surdimensionnement du solénoïde 15 pour vaincre les forces de collage éventuelles des moyens d'obturation 8 et 9 contre les sièges annulaires d'obturation 6 et 7.

Pour le reste, le fonctionnement est identique à celui du mode de réalisation de la figure 1.

Selon une variante avantageuse du mode de réalisation de la figure 2, le passage d'entrée de fluide 3 connecte directement la seconde chambre extrême 2c, c'est-à-dire la chambre limitée par le second moyen d'obturation 9 à lèvre annulaire radiale 11. On favorise ainsi l'étanchéité de la vanne lors de possibles surpressions transitoires.

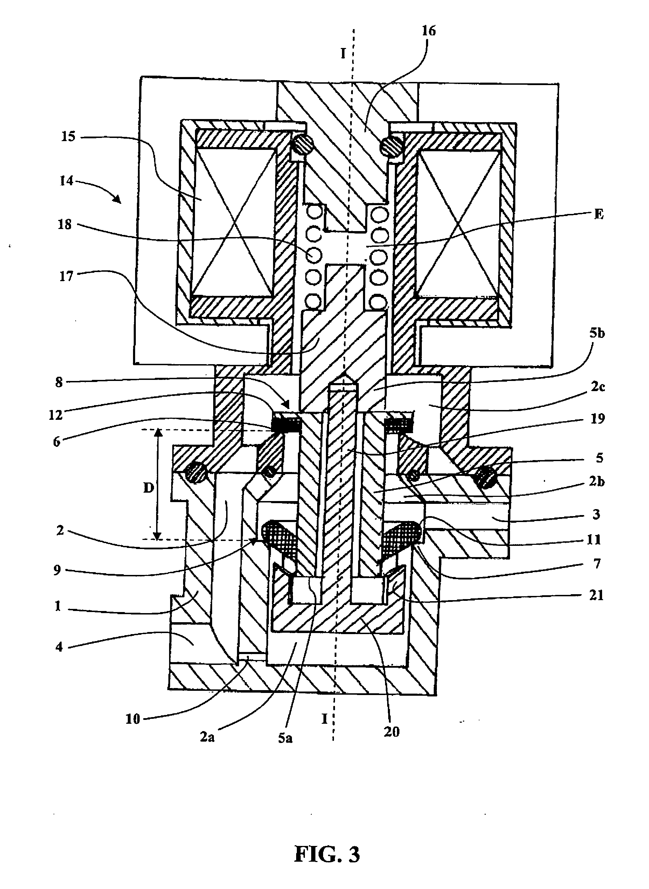

On considère maintenant le troisième mode de réalisation illustré sur la figure 3.

Ce troisième mode de réalisation reprend les moyens du mode de réalisation de la figure 2 qui vient d'être décrit.

Dans ce mode de réalisation de la figure 3, une différence réside dans la disposition relative des moyens d'obturation 8 et 9 : la chambre intermédiaire 2b est raccordée au passage d'entrée de fluide 3, tandis que la seconde chambre extrême 2c est raccordée au passage de sortie de fluide 4 ; un passage d'équilibrage 10, à section réduite, met en communication la première chambre extrême 2a avec le passage de sortie de fluide 4 et donc avec la seconde chambre extrême 2c.

Le second moyen d'obturation 9 et le second siège annulaire d'obturation 7 se trouvent alors positionnés entre la chambre intermédiaire 2b et la première chambre extrême 2a, tandis que le premier moyen d'obturation 8 et le premier siège annulaire d'obturation 6 se trouvent positionnés entre la chambre intermédiaire 2b et la seconde chambre extrême 2c.

Pour le reste, la structure est généralement la même que celle du mode de réalisation de la figure 2.

Une autre différence réside dans l'ajout d'un organe de soulèvement 21 qui favorise le décollement de la lèvre annulaire radiale 11 pour passer en position d'ouverture. L'organe de soulèvement 21 peut être un élément annulaire, apte à porter selon une zone d'appui annulaire sous la lèvre annulaire radiale 11. En alternative, l'élément annulaire peut être tronqué, venant en appui selon une portion seulement de la lèvre annulaire radiale 11. Une autre alternative est en forme d'au moins un doigt.

Par exemple, dans la réalisation illustrée, l'excroissance radiale d'extrémité 20 de la tige axiale 19 comporte au moins deux doigts de soulèvement latéraux 21 qui se développent axialement en direction de la lèvre annulaire radiale 11. En position de fermeture, illustrée sur la figure 3, les doigts de soulèvement 21 sont à l'écart de la lèvre annulaire radiale 11, et n'ont pas d'effet sur l'obturation de la vanne.

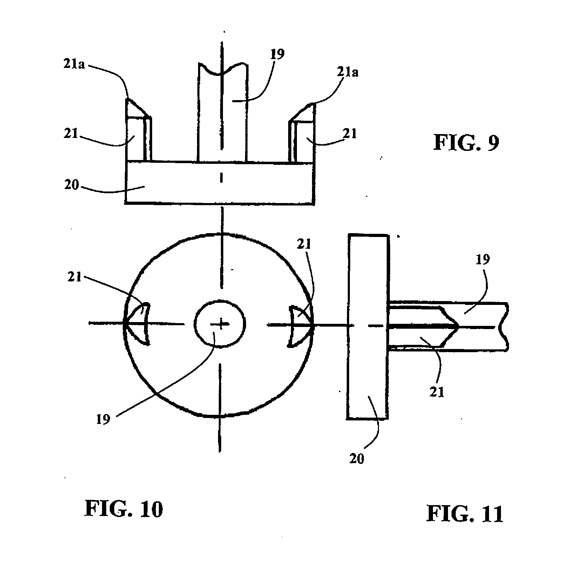

On considèrera les figures 9 à 11, qui illustrent mieux une structure possible d'organe de soulèvement 21 à doigts de soulèvement : on retrouve un tronçon d'extrémité de la tige axiale 19, avec son excroissance radiale d'extrémité 20. Au voisinage du bord de l'excroissance radiale d'extrémité 20, deux doigts de soulèvement 21 se développent axialement. Leurs extrémités supérieures 21a sont chacune en forme de biseau. Les doigts de soulèvement 21 constituent ainsi des moyens de soulèvement localisé, aptes à porter localement en appui contre la lèvre annulaire radiale 11 pour la décoller localement du second siège annulaire d'obturation 7.

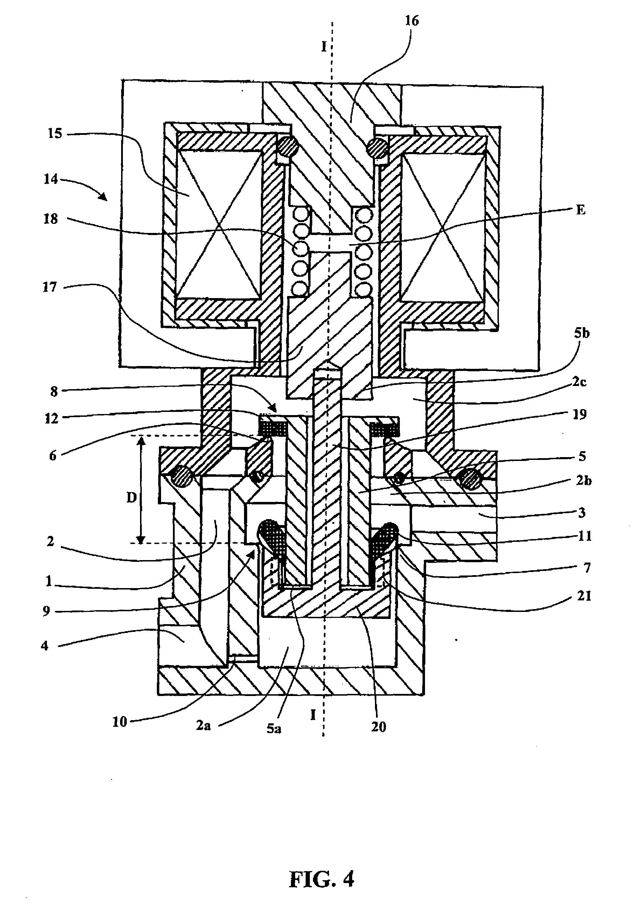

La figure 4 illustre le fonctionnement de ce dispositif, en début d'étape d'ouverture de la vanne. On fait en sorte que les doigts de soulèvement 21 viennent porter sous la lèvre annulaire radiale 11, alors que l'excroissance radiale d'extrémité 20 reste à l'écart de la face inférieure 5a de l'obturateur mobile 5. La longueur des doigts de soulèvement 21 est pour cela choisie en conséquence.

De la sorte, en début d'étape d'ouverture de la vanne, les doigts de soulèvement 21 soulèvent localement la lèvre annulaire radiale 11 et engendrent une fuite locale par laquelle le fluide à haute pression provenant du passage d'entrée de fluide 3 pénètre dans la première chambre extrême 2a. En prévoyant un passage d'équilibrage 10 de diamètre relativement faible, la fuite par la lèvre annulaire radiale 11 provoque une augmentation de pression dans la première chambre extrême 2a, ce qui favorise l'ouverture de la vanne.

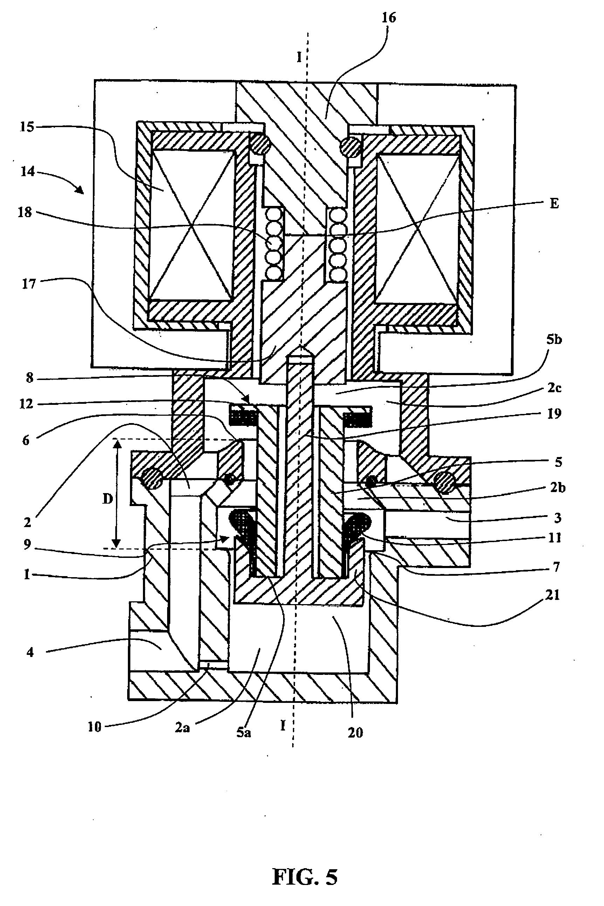

La figure 5 illustre le dispositif des figures 3 et 4, en position de pleine ouverture : les moyens d'obturation 8 et 9 sont à l'écart des sièges annulaires d'obturation correspondants 6 et 7, et le fluide passe librement du passage d'entrée de fluide 3 vers le passage de sortie de fluide 4. Le solénoïde 15 maintient la vanne en position d'ouverture.

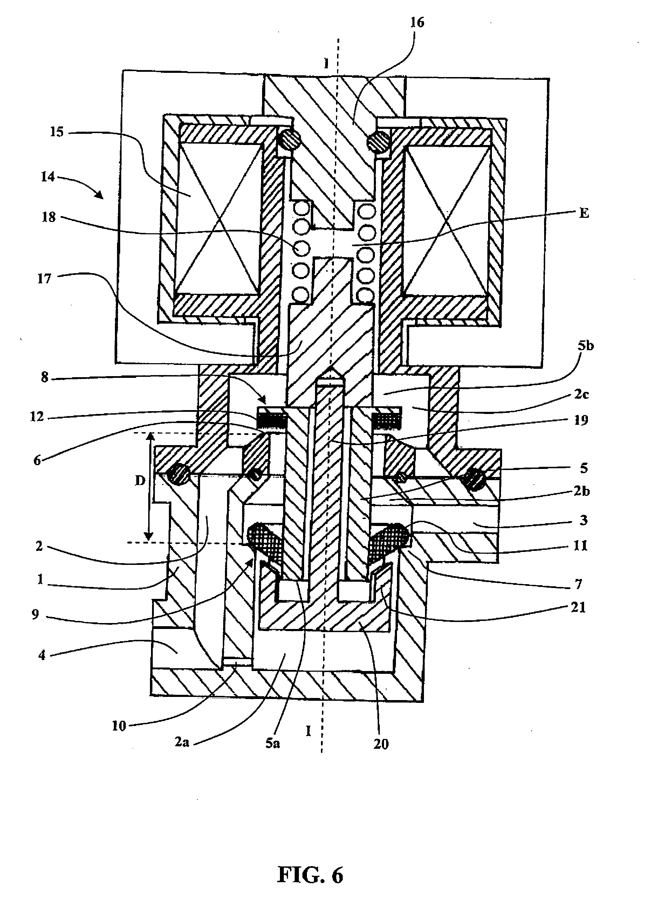

La figure 6 illustre l'étape de fermeture : le courant électrique dans le solénoïde 15 est coupé, et le ressort de rappel 18 déplace le noyau mobile 17 et l'obturateur mobile 5 vers la position de fermeture. L'écart axial entre les deux moyens d'obturation 8 et 9 est choisi légèrement supérieur à l'écart axial D entre les deux sièges annulaires d'obturation 6 et 7. De la sorte, au cours du mouvement de translation du noyau mobile 17 et de l'obturateur mobile 5 vers la position de fermeture, c'est la lèvre annulaire radiale 11 qui vient obturer en premier le débit de fluide en venant porter sur son siège annulaire d'obturation 7 correspondant, comme illustré sur la figure 6. Dans cette position, le second moyen d'obturation 9 maintient encore un débit. La pression de fluide en amont, qui s'exerce sur la lèvre annulaire radiale 11, tend à pousser l'obturateur mobile 5 vers la position de fermeture, ce qui aide à la fermeture de la vanne.

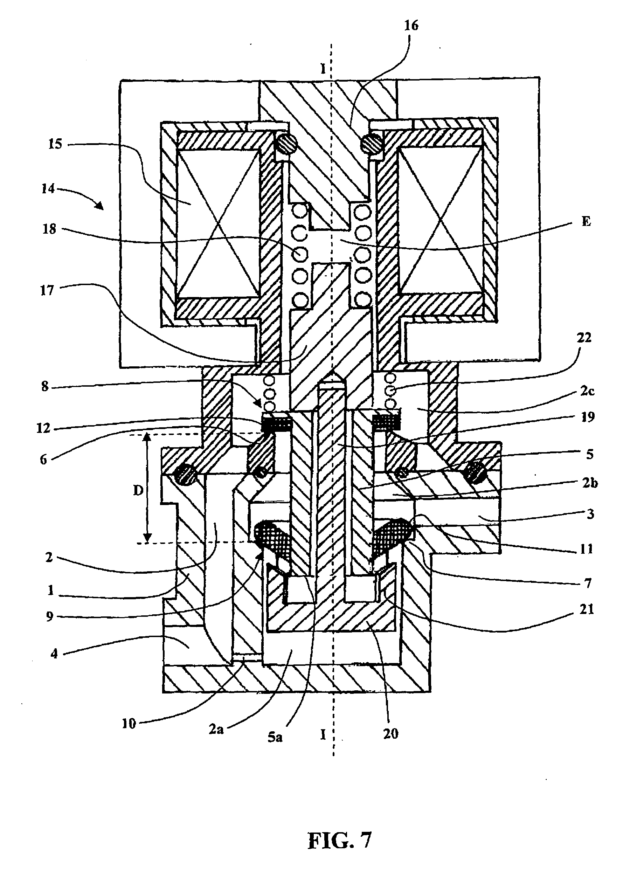

On considère maintenant la figure 7, qui illustre un quatrième mode de réalisation dans lequel on prévoit deux ressorts de rappel.

Ce quatrième mode de réalisation reprend l'ensemble des moyens illustrés sur les figures 3 à 6 du troisième mode de réalisation.

La différence réside seulement dans la présence supplémentaire d'un second ressort de rappel 22, engagé axialement entre le corps de vanne 1 et l'obturateur mobile 5. Ainsi, le second ressort de rappel 22 sollicite directement l'obturateur mobile 5 vers sa position de fermeture, sans agir sur le noyau mobile 17.

Le second ressort de rappel 22 permet de garantir un rappel efficace de l'obturateur mobile 5 vers sa position de fermeture pour une bonne étanchéité de la vanne fermée, en ajoutant sa force à celle du ressort de rappel 18. Cependant, le second ressort de rappel 22 n'agit pas sur la course libre du noyau mobile 17 vis-à-vis de l'obturateur mobile 5, ce qui facilite le début du déplacement du noyau mobile 17 lors d'une étape d'ouverture, pour prendre une bonne énergie cinétique qui va frapper la lèvre annulaire radiale 11 et la décoller du siège annulaire d'obturation 7. Ensuite, le solénoïde 15 doit vaincre la force combinée des deux ressorts de rappel 22 et 18, mais alors son entrefer est plus faible et garantit une force d'attraction largement suffisante pour entraîner l'obturateur mobile 5 jusqu'en position d'ouverture.

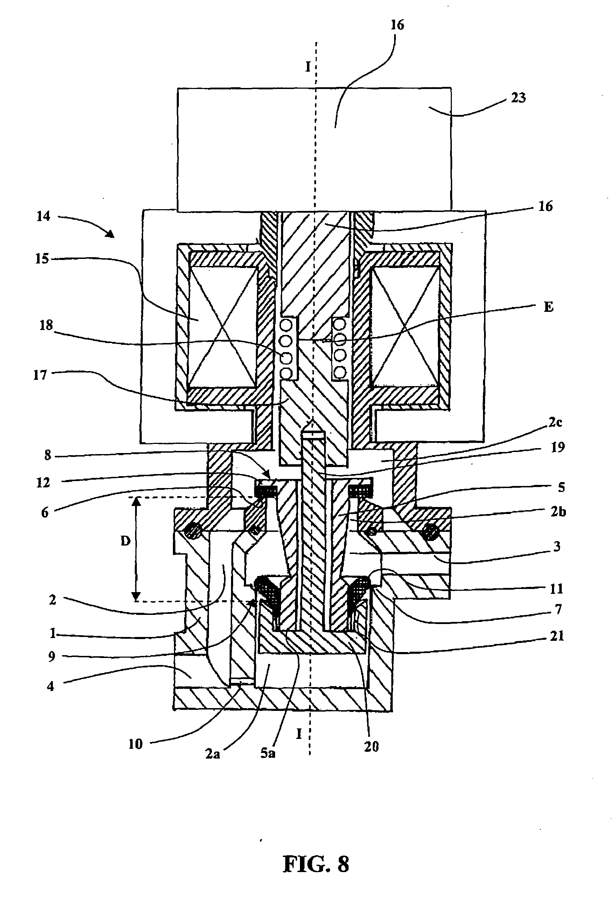

On considère maintenant le cinquième mode de réalisation tel qu'illustré sur la figure 8.

Ce cinquième mode de réalisation reprend l'ensemble des moyens spécifiques du mode de réalisation des figures 3 à 6, avec un organe de soulèvement.

La différence réside dans le fait que ce cinquième mode de réalisation comprend en outre un moyen moteur 23 apte à déplacer axialement le noyau d'attraction 16.

Le moyen moteur 23 peut être un moteur pas à pas, ou un moteur à courant continu.

Le moteur 23 est réinitialisé lors de la mise en contact du noyau d'attraction 16 avec le noyau mobile 17, la vanne étant en position fermée.

On réalise ainsi une vanne de régulation.

Si l'on veut pouvoir réguler immédiatement les faibles débits, avec un moteur 23 assez puissant pour cela, alors on active le solénoïde 15 qui provoque le collage du noyau mobile 17 sur le noyau d'attraction 16, et la vanne est entraînée en permanence par le moteur 23. L'opération de collage des deux noyaux 16 et 17 l'un par rapport à l'autre s'effectue de préférence alors que la vanne est en position fermée, le noyau d'attraction 16 étant déplacé en direction de la vanne.

Si l'on n'a pas besoin de réguler immédiatement les faibles débits, et que l'on veut bénéficier de l'inertie du noyau mobile 17 pour décoller la vanne, alors on peut reculer le moteur 23 de quelques pas, et activer le solénoïde 15 pour ouvrir la vanne. Le moteur 23 peut alors être utilisé pour réguler le passage de fluide, sans aller jusqu'à l'obturation.

En alternative, le moyen moteur 23 peut être un second solénoïde ayant un fonctionnement marche/arrêt, permettant ainsi de sélectionner deux niveaux de débit après que le premier solénoïde ait ouvert à un débit minimum initial.

Une autre possibilité consiste à utiliser un moyen moteur 23 de type solénoïde à fonctionnement continu, par exemple linéaire.

La présente invention n'est pas limitée aux modes de réalisation qui ont été explicitement décrits, mais elle en inclut les diverses variantes et généralisations contenues dans le domaine des revendications ci-après.

## Revendications

1. Vanne à clapet à pression équilibrée, dans laquelle :
- un corps de vanne (1) creux est muni d'un logement intérieur (2) ayant un passage d'entrée de fluide (3) et un passage de sortie de fluide (4),
- un obturateur mobile (5) est logé dans le logement intérieur (2) et est monté coulissant selon une direction de déplacement (I-I),
- le corps de vanne (1) comprend, dans le logement intérieur (2), un premier siège annulaire d'obturation (6) et un second siège annulaire d'obturation (7), à même orientation axiale, décalés l'un de l'autre selon la direction de déplacement (I-I), et délimitant dans le logement intérieur (2) une première chambre extrême (2a), une chambre intermédiaire (2b) entre les deux sièges annulaires d'obturation (6, 7), et une seconde chambre extrême (2c), le second siège annulaire d'obturation (7) ayant un diamètre égal ou légèrement supérieur à celui du premier siège annulaire d'obturation (6),
- l'obturateur mobile (5) comprend un premier moyen d'obturation (8) et un second moyen d'obturation (9), décalés l'un de l'autre selon la direction de déplacement (I-I), et coopérant respectivement avec le premier siège annulaire d'obturation (6) et avec le second siège annulaire d'obturation (7) du corps de vanne (1),
- l'obturateur mobile (5) est déplaçable, par des moyens d'entraînement en translation selon la direction de déplacement (I-I), entre une position d'obturation dans laquelle ses moyens d'obturation (8, 9) sont en contact des sièges annulaires d'obturation respectifs (6, 7) et isolent sélectivement les unes des autres de façon étanche la première chambre extrême (2a), la chambre intermédiaire (2b) et la deuxième chambre extrême (2c), et une position d'ouverture dans laquelle les moyens d'obturation (8, 9) sont à l'écart des sièges annulaires d'obturation respectifs (6, 7),
- les première et seconde chambres extrêmes (2a, 2c) communiquent l'une avec l'autre par un passage d'équilibrage (10),
- la chambre intermédiaire (2b) communique avec l'un du passage d'entrée de fluide (3) et du passage de sortie de fluide (4),
- les chambres extrêmes (2a, 2c) communiquent avec l'autre du passage d'entrée de fluide (3) et du passage de sortie de fluide (4),
**caractérisée en ce que** :
- le second moyen d'obturation (9) comprend une lèvre annulaire radiale (11) élastiquement flexible qui, en position d'obturation, vient en appui contre le second siège annulaire d'obturation (7) du corps de vanne (1),
- la lèvre annulaire radiale (11) est évasée vers l'amont par rapport au sens d'écoulement du fluide depuis le passage d'entrée de fluide (3) vers le passage de sortie de fluide (4).

2. Vanne à clapet selon la revendication 1, **caractérisée en ce que**, en position d'obturation, la lèvre annulaire radiale (11) fléchit vers l'amont sur l'obturateur mobile (5) en étant repoussée par le second siège annulaire d'obturation (7).

3. Vanne à clapet selon l'une des revendications 1 ou 2, **caractérisée en ce que** le second siège annulaire d'obturation (7) est un épaulement du corps de vanne (1).

4. Vanne à clapet selon l'une quelconque des revendications 1 à 3, **caractérisée en ce que** le premier moyen d'obturation (8) comprend un joint annulaire d'obturation (12) sur l'un du corps de vanne (1) et de l'obturateur mobile (5), et comprend une partie annulaire de contact (13) sur l'autre du corps de vanne (1) et de l'obturateur mobile (5) pour coopérer par appui axial selon la direction de déplacement (I-I) avec le joint annulaire d'obturation (12).

5. Vanne à clapet selon l'une quelconque des revendications 1 à 4, **caractérisée en ce que** :
- la chambre intermédiaire (2b) est raccordée au passage de sortie de fluide (4),
- l'une des chambres extrêmes (2a, 2c) est raccordée au passage d'entrée de fluide (3),
- le passage d'équilibrage (10) traverse axialement l'obturateur mobile (5).

6. Vanne à clapet selon l'une quelconque des revendications 1 à 4, **caractérisée en ce que** :
- la chambre intermédiaire (2b) est raccordée au passage d'entrée de fluide (3),
- l'une des chambres extrêmes (2a, 2c) est raccordée au passage de sortie de fluide (4),
- le passage d'équilibrage (10) met en communication l'autre chambre extrême (2c, 2a) avec le passage de sortie de fluide (4).

7. Vanne à clapet selon l'une quelconque des revendications 1 à 6, **caractérisée en ce que** l'obturateur mobile (5) est couplé mécaniquement à un actionneur électromagnétique (14) assurant son entraînement en translation selon la direction de déplacement (I-I).

8. Vanne à clapet selon la revendication 7, **caractérisée en ce que** :
- l'actionneur électromagnétique (14) comprend un solénoïde (15) dans lequel est engagé un noyau d'attraction (16) en fer doux, et dans lequel coulisse selon la direction de déplacement (I-I) un noyau mobile (17) en fer doux couplé mécaniquement à l'obturateur mobile (5),
- un ressort de rappel (18) sollicité le noyaux mobile (17) en translation selon la direction de déplacement (I-I) à l'encontre de la force d'attraction exercée par le solénoïde (15) et par le noyau d'attraction (16) sur le noyau mobile (17).

9. Vanne à clapet selon la revendication 8, **caractérisée en ce que** le solénoïde (15) alimenté exerce une force tendant à ouvrir la vanne, tandis que le ressort de rappel (18) exerce une force tendant à fermer la vanne.

10. Vanne à clapet selon l'une des revendications 8 ou 9, **caractérisée en ce que** :
- le noyau mobile (17) est couplé mécaniquement à l'obturateur mobile (5) avec une capacité limitée d'éloignement axial relatif l'un par rapport à l'autre,
- un organe de soulèvement (21) est couplé mécaniquement au noyau mobile (17), et est apte à porter spécifiquement en appui contre la lèvre annulaire radiale (11) pour la décoller du second siège annulaire d'obturation (7) pendant la course du noyau mobile (17) vers le noyau d'attraction (16), avant entraînement de l'obturateur mobile (5).

11. Vanne à clapet selon la revendication 10, **caractérisée en ce que** le noyau mobile (17) est couplé mécaniquement à l'obturateur mobile (5) par une tige axiale (19) fixée au noyau mobile (17), engagée à coulissement à travers l'obturateur mobile (5), et munie d'une excroissance radiale d'extrémité (20) venant en opposition de la face opposée (5a) de l'obturateur mobile (5) et portant l'organe de soulèvement (21).

12. Vanne à clapet selon l'une des revendications 10 ou 11, **caractérisée en ce que** l'organe de soulèvement (21) vient porter contre la lèvre annulaire (11) après une course initiale du noyau mobile (17) vers le noyau d'attraction (16).

13. Vanne à clapet selon l'une quelconque des revendications 10 à 12, **caractérisée en ce que**, pendant la course du noyau mobile (17) vers le noyau d'attraction (16), le noyau mobile (17) constitue une masse inertielle apte à frapper l'obturateur mobile (5) vers sa position ouverte.

14. Vanne à clapet selon l'une quelconque des revendications 8 à 13, **caractérisée en ce qu'**elle comprend en outre un second ressort de rappel (22), sollicitant directement l'obturateur mobile (5) vers sa position de fermeture.

15. Vanne à clapet selon l'une quelconque des revendications 8 à 13, **caractérisée en ce qu'**elle comprend en outre un moyen moteur (23) apte à déplacer axialement le noyau d'attraction (16).

## Claims

1. Balanced pressure flap valve in which:
- a hollow valve body (1) is provided with an interior housing (2) having a fluid inlet port (3) and a fluid outlet port (4),
- a moving shutter (5) is housed in the interior housing (2) and is mounted so that it can slide in a direction of travel (I-I),
- the valve body (1) comprises, in the interior housing (2), a first annular shut-off seat (6) and a second annular shut-off seat (7), with the same axial orientation, and which are offset from one another in the direction of travel (I-I) and delimit within the interior housing (2) a first end chamber (2a), an intermediate chamber (2b) between the two annular shut-off seats (6, 7) and a second end chamber (2c), the second annular shut-off seat (7) having a diameter equal to or slightly greater than that of the first annular shut-off seat (6),
- the moving shutter (5) comprises a first shut-off means (8) and a second shut-off means (9) which are offset from one another in the direction of travel (I-I) and collaborate respectively with the first annular shut-off seat (6) and with the second annular shut-off seat (7) of the valve body (1),
- the moving shutter (5) can be moved, by translational drive means, in the direction of travel (I-I), between a shut-off position in which its shut-off means (8, 9) are in contact with the respective annular shut-off seats (6, 7) and selectively isolate the first end chamber (2a), the intermediate chamber (2b) and the second end chamber (2c) from one another fluidtightly, and an open position in which the shut-off means (8, 9) are away from the respective annular shut-off seats (6, 7),
- the first and second end chambers (2a, 2c) communicate with one another via a equalising port (10),
- the intermediate chamber (2b) communicates with one of the fluid ports, this being either the fluid inlet port (3) or the fluid outlet port (4),
- the end chambers (2a, 2c) communicate with the other of the fluid ports, this being either the fluid inlet port (3) or the fluid outlet port (4),
**characterised in that**:
- the second shut-off means (9) comprises an elastically flexible radial annular lip (11) which, in the shut-off position, presses against the second annular shut-off seat (7) of the valve body (1),
- the radial annular lip (11) widens in the upstream direction in relation to the direction in which the fluid flows from the fluid inlet port (3) towards the fluid outlet port (4).

2. Flap valve according to claim 1, **characterised in that**, in the shut-off position, the radial annular lip (11) flexes in the upstream direction on the moving shutter (5), being pushed back by the second annular shut-off seat (7).

3. Flap valve according to one of claims 1 and 2, **characterised in that** the second annular shut-off seat (7) is a shoulder of the valve body (1).

4. Flap valve according to any one of claims 1 to 3, **characterised in that** the first shut-off means (8) comprises an annular shut-off seal (12) on one of either the valve body (1) or the mobile shutter (5), and comprises an annular contact part (13) on the other of either the mobile shutter (5) or the valve body (1) to collaborate by pressing axially in the direction of travel (I-I) with the annular shut-off seal (12).

5. Flap valve according to any one of claims 1 to 4, **characterised in that**:
- the intermediate chamber (2b) is connected to the fluid outlet port (4),
- one of the end chambers (2a, 2c) is connected to the fluid inlet port (3),
- the equalising port (10) passes axially through the moving shutter (5).

6. Flap valve according to any one of claims 1 to 4, **characterised in that**:
- the intermediate chamber (2b) is connected to the fluid inlet port (3),
- one of the end chambers (2a, 2c) is connected to the fluid outlet port (4),
- the equalising port (10) places the other end chamber (2c, 2a) in communication with the fluid outlet port (4).

7. Flap valve according to any one of claims 1 to 6, **characterised in that** the moving shutter (5) is mechanically coupled to an electromagnetic actuator (14) which drives its translational movement in the direction of travel (I-I).

8. Flap valve according to claim 7, **characterised in that**:
- the electromagnetic actuator (14) comprises a solenoid (15) in which a soft iron attraction core (16) is engaged, and in which a soft iron moving core plunger (17) mechanically coupled to the moving shutter (5) slides in the direction of travel (I-I),
- a return spring (18) urges the moving core plunger (17) to effect a translational movement in the direction of travel (I-I) against the force of attraction exerted by the solenoid (15) and by the attraction core (16) on the moving core plunger (17).

9. Flap valve according to claim 8, **characterised in that** the powered solenoid (15) applies a force that tends to open the valve, while the return spring (18) applies a force that tends to close the valve.

10. Flap valve according to one of claims 8 and 9, **characterised in that**:
- the moving core plunger (17) is mechanically coupled to the moving shutter (5) with a limited ability to move axially apart,
- a lifting member (21) is mechanically coupled to the moving core plunger (17) and is able specifically to bear against the radial annular lip (11) to detach it from the second annular shut-off seat (7) during the travel of the moving core plunger (17) towards the attraction core (16) before the moving shutter (5) is moved.

11. Flap valve according to claim 10, **characterised in that** the moving core plunger (17) is mechanically coupled to the moving shutter (5) by an axial rod (19) fixed to the moving core plunger (17), slideably engaged through the moving shutter (5), and provided with a radially enlarged end (20) that lies facing the opposing face (5a) of the moving shutter (5) and carries the lifting member (21).

12. Flap valve according to one of claims 10 and 11, **characterised in that** the lifting member (21) comes to bear against the annular lip (11) after the moving core plunger (17) has completed an initial travel towards the attraction core (16).

13. Flap valve according to any one of claims 10 to 12, **characterised in that**, during the travel of the moving core plunger (17) towards the attraction core (16), the moving core plunger (17) constitutes an inertial mass capable of striking the moving shutter (5) towards its open position.

14. Flap valve according to any one of claims 8 to 13, **characterised in that** it further comprises a second return spring (22) directly urging the moving shutter (5) towards its closed position.

15. Flap valve according to any one of claims 8 to 13, **characterised in that** it further comprises a motor means (23) able to move the attraction core (16) axially.

## Patentansprüche

1. Sitzventil mit ausgeglichenem Druck, bei dem:
- ein hohler Ventilkörper (1) mit einem Innenraum (2) versehen ist, der eine Eintrittspassage (3) für Fluid und eine Austrittspassage (4) für Fluid hat,
- ein bewegliches Verschlußorgan (5) in dem Innraum (2) angeordnet ist und in einer Verschiebungsrichtung (I-I) verschieblich montiert ist,
- der Ventilkörper (1) in dem Innenraum (2) einen ersten ringförmigen Ventilsitz (6) und einen zweiten ringförmigen Ventilsitz (7) aufweist, die in gleicher axialer Ausrichtung gegeneinander in der Verschiebungsrichtung (I-I) versetzt sind und die in dem Innenraum (2) eine erste äußere Kammer (2a), eine dazwischen liegende Kammer (2b) zwischen den beiden ringförmigen Ventilsitzen (6, 7) und eine zweite äußere Kammer (2c) begrenzen, wobei der zweite ringförmige Ventilsitz (7) einen Durchmesser aufweist, der gleich oder geringfügig größer ist als der des ersten ringförmigen Ventilsitzes (6),
- das bewegliche Verschlußorgan (5) ein erstes Verschlußmittel (8) und ein zweites Verschlußmittel (9) aufweist, die gegeneinander in der Verschiebungsrichtung (I-I) versetzt sind und mit dem ersten ringförmigen Ventilsitz (6) und dem zweiten ringförmigen Ventilsitz (7) des Ventilkörpers (1) zusammenarbeiten,
- das bewegliche Verschlußorgan (5) durch Antriebsmittel in Translation in der Verschiebungsrichtung (I-I) verschieblich ist, zwischen einer Absperrposition, bei der die Verschlußmittel (8, 9) in Kontakt mit den entsprechenden ringförmigen Ventilsitzen (6, 7) sind und selektiv die erste äußere Kammer (2a), die dazwischenliegende Kammer (2b) und die zweite äußere Kammer (2c) gegeneinander trennen und einer Öffnungsposition, bei der die Verschlußmittel (8, 9) im Abstand zu den entsprechenden ringförmigen Ventilsitzen (6, 7) sind,
- die ersten und zweiten äußeren Kammern (2a, 2c) miteinander über eine Ausgleichspassage (10), kommunizieren,
- die dazwischenliegende Kammer (2b) mit einer von der Eintrittspassage (3) für Fluid und der Austrittspassage (4) für Fluid kommuniziert,
- die äußeren Kammern (2a, 2c) mit der anderen der Eintrittspassage (3) für Fluid und der Austrittspassage (4) für Fluid kommunizieren,
**dadurch gekennzeichnet, daß**:
- das zweite Verschlußmittel (9) eine ringförmige, radial elastisch flexible Lippe (11) aufweist, die in der Verschlußposition zum Anschlag gegen den zweiten ringförmigen Ventilsitz (7) des Ventilkörpers (1) kommt,
- die ringförmige radiale Lippe (11) stromaufwärts bezogen auf die Strömungsrichtung des Fluides von der Eintrittspassage (3) des Fluides zur Austrittspassage (4) des Fluides aufgebogen ist.

2. Sitzventil nach Anspruch 1, **dadurch gekennzeichnet, daß** in der Verschlußposition die ringförmige radiale Lippe (11) stromaufwärts an dem beweglichen Verschlußorgan (5) gebogen ist, wobei sie von dem zweiten ringförmigen Ventilsitz (7) zurückgestoßen wird.

3. Sitzventil nach einem der Ansprüche 1 oder 2, **dadurch gekennzeichnet, daß** der zweite ringförmige Ventilsitz (7) ein Vorsprung des Ventilkörpers (1) ist.

4. Sitzventil nach irgendeinem der Ansprüche 1 bis 3, **dadurch gekennzeichnet, daß** das erste Absperrmittel (8) eine ringförmige Absperrdichtung (12) an einem der Teile von Ventilkörper (1) und beweglichen Absperrorgan (5) aufweist und einen ringförmigen Kontaktteil (13) am anderen Teil vom Ventilkörper (1) oder dem beweglichen Absperrorgan (5), um im axialen Anschlag in der Verschiebungsrichtung (I-I) mit der ringförmigen Absperrdichtung (12) zu kooperieren.

5. Sitzventil nach irgendeinem der Ansprüche 1 bis 4, **dadurch gekennzeichnet, daß**:
- die dazwischenliegende Kammer (2b) an die Austrittspassage (4) des Fluides angeschlossen ist,
- eine der äußeren Kammern (2a, 2c) an die Eintrittspassage (3) des Fluides angeschlossen ist,
- die Ausgleichspassage (10) das bewegliche Absperrorgan (5) axial durchquert.

6. Sitzventil nach irgendeinem der Ansprüche 1 bis 4, **dadurch gekennzeichnet, daß**:
- die dazwischenliegende Kammer (2b) an die Eintrittspassage (3) des Fluides angeschlossen ist,
- eine der äußeren Kammern (2a, 2c) an die Austrittspassage (4) des Fluides angeschlossen ist,
- die Ausgleichspassage (10) die andere äußere Kammer (2c, 2a) mit der Austrittpassage (4) des Fluides in Kommunikation bringt.

7. Sitzventil nach irgendeinem der Ansprüche 1 bis 6, **dadurch gekennzeichnet, daß** das bewegliche Absperrorgan (5) mechanisch mit einem elektromagnetischen Betätigungsorgan (14) gekoppelt ist, das dessen translatorischen Antrieb in der Verschiebungsrichtung (I-I) sicherstellt.

8. Sitzventil nach Anspruch 7, **dadurch gekennzeichnet, daß**:
- das elektromagnetische Betätigungsorgan (14) eine Spule (15) aufweist, in der ein Anzugskern (16) aus Weicheisen angeordnet ist und in welchem ein beweglicher Kern (17) aus Weicheisen in der Verschiebungsrichtung (I-I) gleitet, der mechanisch mit dem beweglichen Absperrorgan (5) gekoppelt ist,
- eine Rückholfeder (18) den beweglichen Kern (17) in Translation in der Verschiebungsrichtung (I-I) gegen die Anzugskraft vorspannt, die von der Spule (15) und dem Anzugskern (16) auf den beweglichen Kern (17) ausgeübt wird.

9. Sitzventil nach Anspruch 8, **dadurch gekennzeichnet, daß** die Spule (15), wenn sie erregt ist, eine Kraft ausübt, die gerichtet ist, das Ventil zu öffnen, während die Rückholfeder (18) eine Kraft ausübt, die gerichtet ist, das Ventil zu schließen.

10. Sitzventil nach einem der Ansprüche 8 oder 9, **dadurch gekennzeichnet, daß**:
- der bewegliche Kern (17) mechanisch mit dem beweglichen Absperrorgan (5) gekoppelt ist, mit einer begrenzten Kapazität einer axialen Verschiebung relativ zueinander,
- ein Anhebungsorgan (21) mechanisch mit dem beweglichen Kern (17) gekoppelt ist und so angepaßt ist, daß es spezifisch in Anschlag gegen die ringförmige radiale Lippe (11) kommt, um ihn vom zweiten ringförmigen Ventilsitz (7) abzuheben, während der Bewegung des beweglichen Kernes (17) in Richtung zum Anzugskern (16) vor einem Antrieb des beweglichen Absperrorgans (5).

11. Sitzventil nach Anspruch 10, **dadurch gekennzeichnet, daß** der bewegliche Kern (17) mit dem beweglichen Absperrorgan (5) mittels eines axialen Schaftes (19) gekoppelt ist, der an dem beweglichen Kern (17) befestigt ist und im gleitenden Eingriff quer zum beweglichen Absperrorgan (5) steht und mit einer radialen äußeren Ausbauchung (20) befestigt ist, die gegenüberliegend zur entgegengesetzten Fläche (5a) des beweglichen Absperrorganes (5) kommt und das Anhebungsorgan (21) zum Abheben trägt.

12. Sitzventil nach einem der Ansprüche 10 oder 11, **dadurch gekennzeichnet, daß** das Anhebungsorgan (21) zum Abheben gegen die ringförmige Lippe (11) nach einer anfänglichen Bewegung des beweglichen Kernes (17) in Richtung zum Anzugskern (16) zum Anschlag kommt.

13. Sitzventil nach irgendeinem der Ansprüche 10 bis 12, **dadurch gekennzeichnet, daß** während der Bewegung des beweglichen Kernes (17) zum Anzugskern (16) der bewegliche Kern (17) eine träge Masse bildet, die dazu ausgebildet ist, das bewegliche Absperrorgan (5) in Richtung zu seiner Öffnungsposition zu treiben.

14. Sitzventil nach irgendeinem der Ansprüche 8 bis 13, **dadurch gekennzeichnet, daß** es zusätzlich eine zweite Rückholfeder (22) aufweist, die das bewegliche Absperrorgan (5) direkt in seine Schließstellung drückt.

15. Sitzventil nach irgendeinem der Ansprüche 8 bis 13, **dadurch gekennzeichnet, daß** es zusätzlich ein motorisches Mittel (23) enthält, das dazu bestimmt ist, den Anzugskern (16) axial zu verschieben.
